# FASCICULE DE BREVET EUROPEEN

(11) **EP 4 256 450 B1**
(45) Date de publication et mention de la délivrance du brevet: **22.04.2026**
(21) Numéro de dépôt: 21820171.3
(22) Date de dépôt: 24.11.2021
(51) Int. Cl.: G06F 21/57, G06Q 20/34, G07F 7/08, G06Q 20/38

(54) **PROCÉDÉ DE CONFIGURATION D'UN TERMINAL DE PAIEMENT, TERMINAL DE PAIEMENT ASSOCIÉ**
VERFAHREN ZUM KONFIGURIEREN EINES ZAHLUNGSTERMINALS UND ENTSPRECHENDES ZAHLUNGSTERMINAL
METHOD FOR CONFIGURING A PAYMENT TERMINAL, AND ASSOCIATED PAYMENT TERMINAL

(30) Priorité: 01.12.2020 FR 2012499
(43) Date de publication de la demande: 11.10.2023
(73) Titulaire: Banks and Acquirers International Holding, 75015 Paris (FR)
(72) Inventeur: BERTHIER, Francis, 07300 Saint Jean de Muzols (FR)
(74) Mandataire: Germain Maureau
(86) Numéro de dépôt international: PCT/EP2021/082868
(87) Numéro de publication internationale: WO 2022/117417

(56) Documents cités:
- EP-A1- 3 588 359
- EP-A1- 3 913 519
- CN-A- 112 825 484
- US-A1- 2011 131 420
- US-A1- 2019 317 755

## Description

### Domaine technique

Le domaine de l'invention est celui des dispositifs électroniques utilisés pour la mise en œuvre d'applications logicielles qui font intervenir ou portent sur des objets de nature confidentielle, et qui sont tenus à ce titre de respecter certaines exigences sécuritaires définies notamment dans le cadre de normes ou de certifications. Parmi ces dispositifs, l'invention se rapporte plus particulièrement aux terminaux de paiement.

### Art antérieur

Les terminaux de paiement, utilisés pour effectuer des opérations de paiement, sont spécifiquement conçus, tant sur le plan matériel que logiciel, pour offrir une protection la plus optimale possible des données confidentielles qui sont susceptibles d'y être saisies ou stockées. Afin de garantir un niveau de sécurité suffisant de ces terminaux, des normes ont été créées, et des procédures de certification visant à établir la conformité de tels dispositifs à ces normes ont été développées. L'utilisation des terminaux de paiement est ainsi soumise à une règlementation sécuritaire stricte, obligatoire et imposée. Plus particulièrement, ces terminaux doivent être certifiés conformes aux normes PCI (pour « *Payment Card Industry* »)*,* comme par exemple à la norme PCI-PTS (pour « *Payment Card Industry - PIN Transaction Security* »)*.* Ces normes définissent des exigences sécuritaires tant sur la conception physique du matériel que sur la partie logicielle mise en œuvre au sein de ces terminaux. Par exemple, les données sensibles doivent généralement être chiffrées, et leur traitement est soumis à des protocoles cryptographiques. L'utilisation de composants logiciels aptes à être mis en œuvre uniquement au sein de processeurs sécurisés, inaccessibles à des tiers, est également généralement requise.

La norme PCI-PTS impose notamment le déploiement de moyens permettant de vérifier l'authenticité et l'intégrité des applications de paiement installées et exécutées sur ces terminaux. Côté terminal de paiement, ces moyens prennent généralement la forme d'une méthode cryptographique unique (par exemple une méthode particulière basée sur le système cryptographique RSA), propre au constructeur du terminal, qui est implémentée au sein d'un micrologiciel (« *firmware »* en anglais) chargé en usine dans une mémoire sécurisée du terminal. Le micrologiciel intégrant la méthode cryptographique doit avoir au préalable passé avec succès un processus de certification garantissant sa conformité aux exigences sécuritaires requises par la norme. La demande de brevet EP 3 588 359 A1 divulgue un terminal de paiement de l'état de l'art antérieur. La demande de brevet US 2011/131420 A1 divulgue un dispositif sécurisé utilisant des techniques pertinentes à la mise en oeuvre d'une pluralité de méthodes cryptographiques.

L'utilisation ultérieure de la méthode cryptographique particulière embarquée dans le micrologiciel certifié équipant une flotte de terminaux de paiement - dans le but de réaliser des opérations de vérification de l'authenticité et de l'intégrité des applications de paiement qui y sont installées - requiert par ailleurs le déploiement, chez les clients acquéreurs de ces terminaux, d'un ensemble d'outils dédiés. Ces outils, qui comprennent plus particulièrement du matériel cryptographique spécifiquement adapté à la mise en œuvre de la méthode cryptographique implémentée dans les terminaux de paiement acquis (par exemple des outils de signature), représentent un investissement généralement coûteux pour le client. Aussi, certains clients sont parfois réfractaires à acquérir de nouveaux terminaux reposant sur une méthode cryptographique différente de celle qu'ils emploient habituellement pour vérifier l'authenticité et l'intégrité des applications de paiement installées dans leur parc existant de terminaux de paiement, au regard des coûts importants à engager pour se doter de nouveaux outils compatibles avec la méthode cryptographique utilisée dans ces nouveaux terminaux. Cette réticence peut constituer un frein à l'adoption de nouveaux terminaux proposés par un constructeur, et lui fermer des marchés, notamment lorsque ce constructeur commercialise des gammes de terminaux de paiement ne reposant pas toutes sur la même méthode cryptographique (ce qui arrive fréquemment pour de multiples raisons, par exemple lors de rachats de concurrents ou de fusion entre constructeurs, ou encore à la suite d'innovations permettant le développement de gammes de terminaux de paiement intégrant des techniques de chiffrement toujours plus sécurisées, etc.).

Pour répondre à cette problématique, la solution généralement adoptée par les constructeurs consiste à décliner, pour chaque gamme (ou modèle) de terminaux de paiement commercialisés, autant de micrologiciels que de méthodes cryptographiques susceptibles d'être proposées aux clients. Une telle solution n'est cependant pas sans contraintes pour le constructeur. Elle lui impose notamment de maintenir, pour chaque gamme de terminaux, plusieurs branches de production en usine, ceci afin d'être en mesure d'intégrer, à la demande d'un client acquéreur, le micrologiciel spécifique comprenant la méthode cryptographique adaptée et compatible avec les outils de vérification déjà déployés chez ce client. Par ailleurs, cette solution oblige le constructeur à multiplier les processus de certification afin de garantir que les nombreux micrologiciels maintenus sont bien tous conformes aux normes PCI en vigueur, processus qui s'avèrent souvent longs et difficiles. Toutes ces contraintes ont des impacts directs pour le constructeur, engendrant notamment une augmentation de la complexité et des coûts de fabrication des terminaux de paiement.

Il existe donc un besoin de proposer des solutions visant à surmonter au moins certains de ces inconvénients de l'art antérieur. Plus particulièrement, il existe un besoin de solutions offrant plus de flexibilité dans le déploiement et la configuration des moyens de vérification de l'authenticité et de l'intégrité des applications chargés sur un terminal de paiement, tout en restant conformes aux exigences sécuritaires requises dans le cadre des normes PCI en vigueur.

### Résumé de l'invention

La présente technique permet de résoudre en partie les problèmes posés par l'art antérieur. La présente technique se rapporte en effet à un procédé de configuration d'un terminal de paiement, qui comprend une étape de chargement, au sein d'une mémoire sécurisée dudit terminal de paiement, d'un micrologiciel comprenant une pluralité de méthodes cryptographiques distinctes, chaque méthode cryptographique de ladite pluralité étant destinée à permettre la mise en œuvre ultérieure, par un tiers disposant du matériel cryptographique adapté à la méthode considérée, d'opérations de vérification de l'authenticité et de l'intégrité d'au moins une application installée sur ledit terminal de paiement électronique.

Dans un mode de réalisation particulier, le procédé de configuration comprend au moins une étape de désactivation d'au moins une méthode cryptographique de ladite pluralité de méthodes cryptographiques distinctes comprises dans ledit micrologiciel.

Selon une caractéristique particulière, ladite étape de désactivation d'au moins une méthode cryptographique comprend une étape de suppression ou de révocation d'un certificat associé à ladite au moins une méthode cryptographique, présent dans ledit terminal de paiement.

Dans un mode de réalisation particulier, le procédé de configuration comprend au moins une étape d'activation d'au moins une méthode cryptographique précédemment désactivée.

Selon une caractéristique particulière, ladite étape d'activation d'au moins une méthode cryptographique comprend une étape de chargement, au sein dudit terminal de paiement, d'un certificat associé à ladite au moins une méthode cryptographique.

Selon un autre aspect, la technique proposée se rapporte également à un terminal de paiement électronique. Un tel terminal de paiement comprend au moins une mémoire sécurisée dans laquelle est chargée un micrologiciel comprenant une pluralité de méthodes cryptographiques distinctes, chaque méthode cryptographique de ladite pluralité étant destinée à permettre la mise en œuvre ultérieure, par un tiers disposant du matériel cryptographique adapté à la méthode considérée, d'opérations de vérification de l'authenticité et de l'intégrité d'au moins une application installée sur ledit terminal de paiement électronique.

Dans un mode de réalisation particulier, au moins une desdites méthodes cryptographiques distinctes comprises dans le micrologiciel du terminal de paiement est désactivée.

Selon une caractéristique particulière, ladite au moins une desdites méthodes cryptographiques désactivées est désactivée de manière réversible.

Les différents modes de réalisation mentionnés ci-dessus sont combinables entre eux pour la mise en œuvre de l'invention.

### Figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
[Fig 1] illustre les principales étapes d'un procédé de configuration d'un terminal de paiement, dans un mode de réalisation particulier de la technique proposée ;
[Fig 2] présente une architecture simplifiée d'un terminal de paiement selon un mode de réalisation particulier de la technique proposée.

### Description détaillée de l'invention

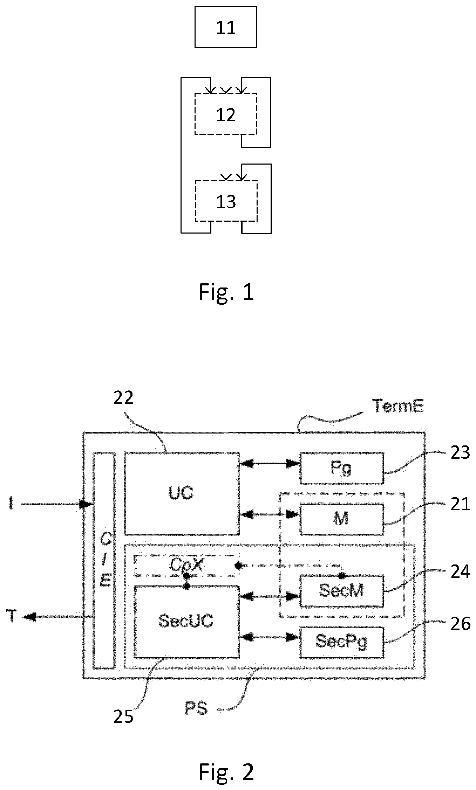

La présente technique se rapporte à un procédé de configuration d'un terminal de paiement, illustré en relation avec la figure 1 dans un mode de réalisation particulier. Selon le principe général de la technique proposée, le procédé comprend une étape 11 de chargement, au sein d'une mémoire sécurisée du terminal de paiement, d'un micrologiciel comprenant une pluralité de méthodes cryptographiques distinctes (au moins deux), chaque méthode cryptographique de ladite pluralité étant destinée à permettre la mise en œuvre ultérieure, par un tiers disposant du matériel cryptographique adapté à la méthode considérée, d'opérations de vérification de l'authenticité et de l'intégrité d'au moins une application installée sur ledit terminal de paiement électronique. Le micrologiciel intègre par exemple, sous la forme de différents jeux d'instructions, deux méthodes cryptographiques distinctes permettant chacune d'effectuer (de manière différente) des opérations de vérification d'authenticité et d'intégrité d'applications installées sur le terminal de paiement. Ainsi, le micrologiciel comprend par exemple une première méthode cryptographique basée sur un système de cryptographie RSA, et une deuxième méthode cryptographique à base de courbes elliptiques. L'exemple précédent est bien entendu donné à titre purement illustratif et non limitatif, et un même micrologiciel selon la technique proposée peut intégrer un nombre plus important de méthodes cryptographiques distinctes. Selon une caractéristique particulière, l'étape 11 de chargement est effectuée en usine, lors de la fabrication du terminal de paiement.

Ainsi, contrairement aux solutions de l'art antérieur, plusieurs méthodes cryptographiques - permettant chacune de vérifier l'authenticité et l'intégrité d'applications (et plus particulièrement, d'applications de paiement) installées dans un terminal de paiement - sont directement implémentées dans un même micrologiciel chargé dans une mémoire sécurisée du terminal de paiement lors de sa fabrication. De cette manière, le nombre de micrologiciels que le constructeur doit soumettre aux processus de certifications PCI est réduit, puisqu'il n'est plus nécessaire de faire certifier autant de micrologiciels que de méthodes proposées par le constructeur. Par ailleurs, la chaine de fabrication des terminaux de paiement est également simplifiée, et les coûts de fabrication réduits, puisque le constructeur n'est plus tenu de maintenir autant de branches de productions de micrologiciels que de méthodes proposées. L'intégration de multiples méthodes cryptographiques au sein du même firmware offre également de nouvelles perspectives sur le plan sécuritaire puisqu'elle rend possible la réalisation en chaine d'opérations de vérification d'authenticité et d'intégrité d'une même application selon différentes méthodes, offrant ainsi des garanties accrues en termes de sécurisation des terminaux de paiement.

Dans un mode de réalisation particulier, de manière optionnelle, le procédé de configuration selon la technique proposée comprend au moins une étape 12 de désactivation d'au moins une des méthodes cryptographiques implémentées dans le micrologiciel chargé dans la mémoire sécurisée du terminal de paiement. Dans le contexte de la présente technique, une telle désactivation ne doit pas être entendue comme une suppression de la méthode cryptographique concernée : la méthode cryptographique en question est toujours présente dans le micrologiciel, mais elle ne peut plus être invoquée grâce à la mise en œuvre de moyens de blocage qui peuvent être logiciels ou matériels, et dont un exemple est donné à titre illustratif, ultérieurement dans le présent document. Selon une caractéristique particulière, l'étape 12 est mise en œuvre au moins une première fois, avant la mise sur le marché du terminal de paiement, dans une phase de personnalisation du terminal destinée à le rendre conforme aux besoins et/ou attente de son acquéreur. Dans ce cas, l'étape 12 consiste par exemple à désactiver toutes les méthodes cryptographiques qui ne correspondent pas ou ne sont pas compatibles avec les outils déjà déployés chez le client pour la mise en œuvre d'opérations de vérification de l'authenticité et de l'intégrité des applications installées sur le terminal de paiement. En fonction des clients et des outils à leur disposition, les méthodes cryptographiques désactivées pour un même modèle de terminal ne seront donc pas nécessairement les mêmes. La technique proposée offre ainsi une flexibilité accrue en termes de personnalisation des terminaux de paiement. Selon une autre caractéristique particulière, une ou plusieurs itérations de l'étape 12 de désactivation peuvent également être mises en œuvre après la mise sur le marché du terminal de paiement. Cette possibilité est particulièrement intéressante dans l'éventualité il serait détecté que l'une des méthodes cryptographiques implémentées au sein du micrologiciel présenterait une faille susceptible d'être exploitée par des personnes malveillantes pour obtenir des données sensibles et/ou réaliser des transactions de paiement de manière frauduleuse : avec la technique proposée, la méthode compromise peut être désactivée et une autre méthode cryptographique présente sur le micrologiciel peut être utilisée lieu et place de la précédente. Une solution de repli est ainsi directement et rapidement disponible, car présente dès l'origine au sein du micrologiciel du terminal de paiement. À cette fin, dans un mode de réalisation particulier, de manière optionnelle, le procédé comprend au moins une étape 13 d'activation (ou de réactivation) d'une méthode cryptographique qui aurait été précédemment désactivée lors de la mise en œuvre d'une étape 12 de désactivation telle que précédemment décrite. De cette manière, la technique proposée permet notamment d'activer une des méthodes cryptographiques intégrée dès l'origine dans le micrologiciel embarqué dans un terminal de paiement, mais qui avait typiquement été désactivée pour les terminaux acquis par un client donné, car ne correspondant pas aux outils qui étaient déjà déployés chez ce client. On évite ainsi d'avoir à remplacer tous les terminaux de paiement concernés (dont le nombre peut atteindre des milliers de terminaux), en optant pour une solution beaucoup moins contraignante et plus centralisée consistant à déployer, si le client ne les possédait pas déjà, les outils nécessaires à la réalisation des opérations de vérification d'authenticité et d'intégrité des applications de paiement selon la méthode cryptographique nouvellement activée.

Dans un mode de réalisation particulier de la technique proposée, l'activation et/ou la désactivation des méthodes cryptographiques - implémentées dans le micrologiciel du terminal de paiement - de vérification d'authenticité et d'intégrité d'applications est réalisée au moyen de certificats électroniques. Plus particulièrement, dans ce mode de réalisation, chaque méthode cryptographique est associée à un certificat électronique unique, issu directement ou indirectement (via un ou plusieurs certificats intermédiaires) d'un certificat racine du constructeur chargé dans le terminal de paiement, ou à tout le moins accessible depuis ce terminal de paiement (via une interface et un réseau de communication par exemple). Une méthode cryptographique n'est alors utilisable (i.e. activée) que si le certificat électronique associé est également présent dans le terminal de paiement, et que ce certificat est valide (i.e. authentique et intègre - ce qui peut être vérifié en remontant classiquement la chaine de certificats jusqu'au certificat racine - mais également non expiré et non révoqué). Le certificat électronique associé à une méthode peut donc être qualifié, dans une certaine mesure, de certificat d'activation de cette méthode. Ainsi, considérant un terminal de paiement dont le micrologiciel comprend une pluralité de méthodes cryptographiques au sens de la technique proposée, c'est le choix des certificats d'activation chargés dans le terminal qui définit les méthodes cryptographiques qui sont activées ou non parmi ladite pluralité de méthodes disponibles. Les étapes 12 et 13 précédemment décrites et relatives à l'activation et à la désactivation de méthodes cryptographiques présentes dans le micrologiciel du terminal de paiement se rapportent alors à des opérations de traitement des certificats d'activation associés à ces méthodes. Ainsi, selon une caractéristique particulière, l'étape 13 d'activation d'une méthode cryptographique présente dans le micrologiciel chargé dans un terminal de paiement comprend le chargement, au sein de ce terminal, du certificat d'activation associé à ladite méthode. Pour ce qui est de l'étape 12 de désactivation d'une méthode cryptographique présente dans le micrologiciel, elle peut être réalisée de différentes manières. En premier lieu, désactiver une méthode cryptographique d'un terminal de paiement peut s'entendre comme le fait de ne pas charger le certificat d'activation associé à cette méthode dans le terminal. Il s'agit typiquement du cas de la configuration initiale du terminal de paiement, avant sa toute première mise sur le marché : plusieurs méthodes cryptographiques sont présentes au sein du micrologiciel du terminal, mais seuls les certificats d'activation associés aux méthodes à activer sont chargés dans le terminal (ce qui revient à désactiver les autres). En deuxième lieu, la désactivation d'une méthode cryptographique peut intervenir sur une méthode préalablement activée (par exemple parce qu'il a été détecté que la méthode en question, utilisée jusqu'alors, est compromise) : dans ce cas la désactivation peut être mise en œuvre de manière directe, par suppression ou par révocation (temporaire ou définitive) du certificat d'activation associé à la méthode ciblée, ou encore de manière indirecte, par une action (e.g. suppression, révocation) sur un certificat intermédiaire entre le certificat d'activation et le certificat racine visant à rompre la chaine permettant normalement de vérifier l'authenticité et l'intégrité du certificat de validation. Selon le niveau de sécurisation recherché, de telles opérations sur les certificats d'activation (chargement, suppression, révocation, etc.) peuvent être configurées de manière à ce qu'elles ne puissent être effectuées qu'en usine, avec nécessité d'un accès physique au terminal (par exemple uniquement après une réinitialisation complète du terminal, i.e. un reset complet visant à le remettre dans un état « sortie d'usine » précédant sa personnalisation). Alternativement, ces opérations sur les certificats d'activation peuvent être configurées de manière à pouvoir être mises en œuvre à distance, dans le cadre de procédures sécurisées accessibles via un réseau de communication aux seules personnes habilités (avec des mesures de protections appropriées qui peuvent être diverses : mot de passe, authentification biométrique, clé PKI, etc.).

Selon un autre aspect, la technique proposée se rapporte également à un terminal de paiement, dont une architecture simplifiée est présentée en relation avec la figure 2, dans un mode de réalisation particulier. Un tel terminal électronique (TermE) comprend une mémoire 21, une unité de traitement 22 équipée par exemple d'un microprocesseur, et pilotée par un programme d'ordinateur 23. Le terminal électronique comprend également une mémoire sécurisée 24, qui peut être fusionnée avec la mémoire 21 (comme indiqué en pointillés, dans ce cas la mémoire 21 est une mémoire sécurisée), une unité de traitement sécurisée 25 équipée par exemple d'un microprocesseur sécurisée et de mesure physiques de protection (protection physique autour de la puce, par treillis, vias, etc. et protection sur les interfaces de transmission de données), et pilotée par un programme d'ordinateur 26 spécifiquement dédié à cette unité de traitement sécurisée 25. L'unité de traitement sécurisée 25 peut dans certains cas, en fonction de la solution matérielle retenue, être incluse dans l'unité de traitement 22 (elle prend alors par exemple la forme d'une zone sécurisée dédiée de l'unité de traitement 22, isolée du reste de l'unité de traitement 22 de manière à garantir une parfaite étanchéité entre les fonctionnalités réalisées par chaque partie). Le programme d'ordinateur 26 dédié à l'unité de traitement sécurisée 25 peut notamment prendre la forme d'un micrologiciel comprenant des jeux d'instructions permettant, une fois chargés dans la mémoire sécurisé 24, de définir une pluralité de méthodes cryptographiques distinctes, destinées chacune à permettre la mise en œuvre ultérieure, par un tiers disposant du matériel cryptographique adapté à la méthode considérée et en relation avec l'unité de traitement sécurisée 25, d'opérations de vérification de l'authenticité et de l'intégrité d'au moins une application installée sur ledit terminal de paiement électronique. Le groupe composé de l'unité de traitement sécurisée 25, de la mémoire sécurisée 24 et du programme d'ordinateur dédié 26 constitue la portion sécurisée (PS) du terminal électronique. Dans au moins un mode de réalisation, la présente technique est mise en œuvre sous la forme d'un micrologiciel et d'un ensemble de certificats d'activation installés en partie ou en totalité sur cette portion sécurisée du terminal de paiement. Dans au moins un autre mode de réalisation, la présente technique est mise en œuvre sous la forme d'un composant dédié (CpX) pouvant traiter des données des unités de traitement et installé en partie ou en totalité sur la portion sécurisée du terminal de paiement. Par ailleurs, le terminal comprend également des moyens de communication (CIE) se présentant par exemple sous la forme de composants réseaux (WiFi, 3G/4G/5G) qui permettent au terminal de recevoir des données (I) en provenance d'entités connectées à un ou plusieurs réseaux de communication et des transmettre des données traitées (T) à de telles entités.

Comme explicité précédemment, dans un mode de réalisation particulier, le terminal de paiement selon la technique proposée peut être configuré, dans une phase de personnalisation avant sa mise sur le marché, ou postérieurement à sa mise sur le marché, de manière à ce qu'au moins une parmi la pluralité de méthodes cryptographiques embarquées dans le micrologiciel 26 soient désactivées. Selon une caractéristique particulière de ce mode de réalisation, une telle désactivation est réversible, et une méthode cryptographique préalablement désactivée peut être réactivée (de manière par exemple à faire office de position de repli intégrée, dans l'éventualité où une faille de sécurité serait détectée sur une méthode cryptographique précédemment utilisée).

## Revendications

1. Procédé de configuration d'un terminal de paiement, ledit procédé étant **caractérisé en ce qu'**il comprend :
- une étape de chargement (11), au sein d'une mémoire sécurisée dudit terminal de paiement, d'un micrologiciel comprenant une pluralité de méthodes cryptographiques distinctes, chaque méthode cryptographique de ladite pluralité étant destinée à permettre la mise en œuvre ultérieure, par un tiers disposant du matériel cryptographique adapté à la méthode considérée, d'opérations de vérification de l'authenticité et de l'intégrité d'au moins une application installée sur ledit terminal de paiement ;
- au moins une étape de désactivation (12) d'au moins une méthode cryptographique de ladite pluralité de méthodes cryptographiques distinctes comprises dans ledit micrologiciel, ladite étape de désactivation comprenant une étape de suppression ou de révocation d'un certificat associé à ladite au moins une méthode cryptographique, présent dans ledit terminal de paiement.

2. Procédé de configuration selon la revendication 1, **caractérisé en ce qu'**il comprend au moins une étape d'activation (13) d'au moins une desdites méthodes cryptographiques précédemment désactivées.

3. Procédé de configuration selon la revendication 2, **caractérisé en ce que** ladite étape d'activation (13) d'au moins une méthode cryptographique comprend une étape de chargement, au sein dudit terminal de paiement, d'un certificat associé à ladite au moins une méthode cryptographique.

4. Terminal de paiement **caractérisé en ce qu'**il comprend :
- au moins une mémoire sécurisée dans laquelle est chargée un micrologiciel comprenant une pluralité de méthodes cryptographiques distinctes, chaque méthode cryptographique de ladite pluralité étant destinée à permettre la mise en œuvre ultérieure, par un tiers disposant du matériel cryptographique adapté à la méthode considérée, d'opérations de vérification de l'authenticité et de l'intégrité d'au moins une application installée sur ledit terminal de paiement ;
- des moyens de désactivation d'au moins une méthode cryptographique de ladite pluralité de méthodes cryptographiques distinctes comprises dans ledit micrologiciel, lesdits moyens de désactivation comprenant des moyens de suppression ou de révocation d'un certificat associé à ladite au moins une méthode cryptographique, présent dans ledit terminal de paiement.

5. Terminal de paiement selon la revendication 4 **caractérisé en ce qu'**au moins une desdites méthodes cryptographiques distinctes est désactivée.

6. Terminal de paiement selon la revendication 5 **caractérisé en ce qu'**au moins une desdites méthodes cryptographiques désactivées est désactivée de manière réversible.

## Patentansprüche

1. Verfahren zur Konfiguration eines Zahlungsterminals, wobei das Verfahren **dadurch gekennzeichnet ist, dass** es umfasst:
- einen Schritt des Ladens (11), innerhalb eines sicheren Speichers des Zahlungsterminals, einer Firmware, die eine Vielzahl von verschiedenen kryptografischen Methoden umfasst, wobei jede kryptografische Methode der Vielzahl dazu bestimmt ist, die spätere Durchführung von Operationen zur Überprüfung der Echtheit und der Integrität mindestens einer auf dem Zahlungsterminal installierten Anwendung durch einen Dritten, der über die für die betreffende Methode geeignete kryptografische Hardware verfügt, zu ermöglichen;
- mindestens einen Schritt des Deaktivierens (12) mindestens einer kryptografischen Methode der Vielzahl von verschiedenen kryptografischen Methoden, die in der Firmware umfasst sind, wobei der Schritt des Deaktivierens einen Schritt des Löschens oder des Widerrufens eines der mindestens einen kryptografischen Methode, die in dem Zahlungsterminal vorhanden ist, zugeordneten Zertifikats umfasst.

2. Konfigurationsverfahren nach Anspruch 1, **dadurch gekennzeichnet, dass** es mindestens einen Schritt des Aktivierens (13) mindestens einer der zuvor deaktivierten kryptografischen Methoden umfasst.

3. Konfigurationsverfahren nach Anspruch 2, **dadurch gekennzeichnet, dass** der Schritt des Aktivierens (13) mindestens einer kryptografischen Methode einen Schritt des Ladens, innerhalb des Zahlungsterminals, eines der mindestens einen kryptografischen Methode zugeordneten Zertifikats umfasst.

4. Zahlungsterminal, **dadurch gekennzeichnet, dass** es umfasst:
- mindestens einen sicheren Speicher, in den eine Firmware geladen ist, die eine Vielzahl von verschiedenen kryptografischen Methoden umfasst, wobei jede kryptografische Methode der Vielzahl dazu bestimmt ist, die spätere Durchführung von Operationen zur Überprüfung der Echtheit und der Integrität mindestens einer auf dem Zahlungsterminal installierten Anwendung durch einen Dritten, der über die für die betreffende Methode geeignete kryptografische Hardware verfügt, zu ermöglichen;
- Mittel zum Deaktivieren mindestens einer kryptografischen Methode der Vielzahl von verschiedenen kryptografischen Methoden, die in der Firmware umfasst sind, wobei die Mittel zum Deaktivieren Mittel zum Löschen oder Widerrufen eines der mindestens einen kryptografischen Methode, die in dem Zahlungsterminal vorhanden ist, zugeordneten Zertifikats umfasst.

5. Zahlungsterminal nach Anspruch 4, **dadurch gekennzeichnet, dass** mindestens eine der verschiedenen kryptografischen Methoden deaktiviert ist.

6. Zahlungsterminal nach Anspruch 5, **dadurch gekennzeichnet, dass** mindestens eine der deaktivierten kryptografischen Methoden reversibel deaktiviert ist.

## Claims

1. A method for configuring a payment terminal, said method being **characterized in that** it comprises:
- a step of loading (11), within a secure memory of said payment terminal, a firmware comprising a plurality of distinct cryptographic methods, each cryptographic method of said plurality being intended to enable the subsequent implementation, by a third party having cryptographic hardware adapted to the method in question, of operations to verify the authenticity and integrity of at least one application installed on said payment terminal;
- at least one step of deactivating (12) at least one cryptographic method of said plurality of distinct cryptographic methods included in said firmware, said deactivating step comprising a step of deleting or revoking a certificate associated with said at least one cryptographic method, present in said payment terminal.

2. The configuration method according to claim 1, **characterized in that** it comprises at least one step of activating (13) at least one of said previously deactivated cryptographic methods.

3. The configuration method according to claim 2, **characterized in that** said step of activating (13) at least one cryptographic method comprises a step of loading, within said payment terminal, a certificate associated with said at least one cryptographic method.

4. A payment terminal **characterized in that** it comprises:
- at least one secure memory in which a firmware comprising a plurality of distinct cryptographic methods is loaded, each cryptographic method of said plurality being intended to enable the subsequent implementation, by a third party having cryptographic hardware adapted to the method in question, of operations to verify the authenticity and integrity of at least one application installed on said payment terminal;
- means for deactivating at least one cryptographic method of said plurality of distinct cryptographic methods included in said firmware, said deactivating means comprising means for deleting or revoking a certificate associated with said at least one cryptographic method, present in said payment terminal.

5. The payment terminal according to claim 4 **characterized in that** at least one of said distinct cryptographic methods is deactivated.

6. The payment terminal according to claim 5 **characterized in that** at least one of said disabled cryptographic methods is reversibly deactivated.
